Europäisches Patentamt

**European Patent Office**

**Office européen des brevets**

(19)

(11) Veröffentlichungsnummer: **0 056 147**
**A1**

(12) **EUROPÄISCHE PATENTANMELDUNG**

(21) Anmeldenummer: **81110773.9**

(22) Anmeldetag: **24.12.81**

(51) Int. Cl.³: **F 25 B 29/00,** F 25 B 15/12

(30) Priorität: **08.01.81 DE 3100348**

(43) Veröffentlichungstag der Anmeldung: **21.07.82**
**Patentblatt 82/29**

(84) Benannte Vertragsstaaten: **AT BE CH FR GB IT LI LU NL SE**

(71) Anmelder: **Markfort, Dieter, Dr.-Ing., Am Tor 2, D-5064 Rösrath 3 (DE)**

(72) Erfinder: **Markfort, Dieter, Dr.-Ing., Am Tor 2, D-5064 Rösrath 3 (DE)**

(74) Vertreter: **Kessel, Egbert, Dipl.-Ing. et al, Patentanwälte Dr.jur. Dipl.-Ing. W. Böhme Dipl.-Ing. E. Kessel Dipl.-Ing. V. Böhme Frauentorgraben 73, D-8500 Nürnberg (DE)**

(54) **Resorptions-Anlage zur Wärmetransformation.**

(57) Im Rahmen wirtschaftlicher Nutzung von Primär-Energie spielt die Rezyklierung von Wärme sowohl auf dem Gebiet der Energietechnik als auch der chemischen Verfahrenstechnik eine bedeutende Rolle. Das technische Problem ist die Transformation von Wärme niedrigerer Temperatur auf höhere Temperatur durch Einsatz von Energie.

In einer zu diesem Zweck konzipierten Resorptions-Anlage wird das Problem unter Anwendung der Prinzipien der differentiellen, nichtadiabaten Desorption und Absorption dadurch gelöst, daß die Differenzen zwischen den kennzeichnenden Temperaturen durch Konzentrationsänderungen der Lösungen bei nur geringer Druckdifferenz überbrückt werden, indem Desorber und Absorber zu einer integrierten Baugruppe DA und Resorber und Entgaser zu einer weiteren integrierten Baugruppe RE mit jeweils internem thermischen Kontakt zusammengefaßt werden und die beiden Lösungskreisläufe bei gleicher Temperatur, gleichem Druck und identischer Konzentration am Austritt aus dem Absorber bzw. Entgaser vereinigt, durch eine gemeinsame Lösungspumpe auf höheren Druck gefördert und vor dem Eintritt in den Desorber bzw. Resorber wieder getrennt werden.

0056147

- 1 -

Anmelder: Dr. Ing. Dieter Markfort

Titel: Resorptions-Anlage zur Wärmetransformation

Die vorliegende Erfindung bezieht sich auf eine Resorptions-Anlage zur Transformation von Wärme niedriger Temperatur auf mittlere Temperatur unter Einsatz der Exergie von Wärme hoher Temperatur, die zwei Lösungskreisläufe aufweist, in denen die sogenannte Lösung, ein Gemisch aus Arbeits- und Lösungsmittel, strömt, wobei in einem Desorber aus der unter höherem Druck stehenden Lösung des ersten Kreises Arbeitsmittel ausgetrieben wird, welches von der unter demselben Druck stehenden Lösung des zweiten Kreises in einem Resorber aufgenommen wird und nach Entspannung auf einen tieferen Druck in einem Entgaser wieder freigesetzt von der ebenfalls entspannten armen Lösung des ersten Kreises in einem Absorber wieder aufgenommen wird und wobei entsprechend der Thermodynamik der Zweistoffgemische die Trennung (Desorption) der Komponenten des Gemischs unter Aufnahme von Wärme und die Vereinigung (Absorption) der Komponenten des Gemischs unter Abgabe von Wärme stattfindet.

Wegen der thermodynamischen Beziehungen zwischen Druck, Konzentration und Temperatur der Lösungen kann die latente Verdampfungs- bzw. Kondensationswärme des Arbeitsmittels zur Transformation von Wärmeströmen herangezogen werden. Die bekannten Ausführungen von Resorptions-Anlagen nutzen die Abhängigkeit der Temperatur vom Druck bei geringer Variation der Konzentration aus, weshalb zur Aufrechterhaltung der Massen- und Wärmebilanzen zwei getrennte Lösungskreisläufe vorhanden sein müssen, die bei, dem Extremalwert der Temperatur entsprechender, Konzentration betrieben werden. Daraus resultiert ein relativ hoher Aufwand an Maschinen- und Regeltechnik, der zusammen mit der Vielzahl an verfahrenstechnischen Apparaten - außer den vier oben genannten werden noch zwei Lösungsrekuperatoren benötigt - und dem bei den bekannten Anlagen nur mäßigen Gütegrad für die geringe Verbreitung verantwortlich ist. Darüber hinaus ist der Bereich der Betriebsparameter starr miteinander gekoppelt, insbesondere ist bei vorgegebenen Extremaltemperaturen die Mitteltemperatur nicht mehr frei wählbar, gleichzeitig werden auch die Drücke auf den Hoch- und Niederdruckseiten der beiden Kreisläufe festgelegt.

Aufgabe der vorliegenden Erfindung ist die Entwicklung eines Anlagenkonzepts, das mit nur einer Lösungspumpe arbeitet, das durch integrierte Bauweise die Vielzahl verfahrenstechnischer Apparate reduziert, das eine größere

- 3 -

Flexibilität bei der Wahl der Betriebsparameter zuläßt und das einen wesentlich höheren Gütegrad verwirklicht.

Die Aufgabe wird erfindungsgemäß unter Anwendung der Prinzipien der differentiellen, nicht-adiabaten Desorption und Absorption dadurch gelöst, daß die Differenzen zwischen den kennzeichnenden Temperaturen durch Konzentrationsänderungen der Lösungen bei nur geringer Druckdifferenz überbrückt werden, indem Desorber und Absorber zu einer integrierten Baugruppe DA und Resorber und Entgaser zu einer weiteren integrierten Baugruppe RE mit jeweils internem thermischen Kontakt zusammengefaßt werden und die beiden Lösungskreisläufe bei gleicher Temperatur, gleichem Druck und identischer Konzentration am Austritt aus dem Absorber bzw. Entgaser vereinigt, durch eine gemeinsame Lösungspumpe auf höheren Druck gefördert, vor dem Eintritt in den Desorber bzw. Resorber wieder getrennt werden.

Das erfindungsgemäße Anlagenkonzept ist wegen der Überbrückung der Temperaturdifferenzen mittels Variation der Lösungskonzentrationen weitgehend unabhängig von der Höhe der Absolutdrucke, während die Druckdifferenz nur durch die Temperaturspanne der externen Wärmequellen vorgegeben wird. Auch die Extremaltemperaturen werden lediglich durch die Dampfdrucke der reinen Stoffe des Gemischs begrenzt. Von besonders vorteilhafter Bedeutung ist die Tatsache, daß die Mitteltemperatur frei zwischen den Extremaltempe-

- 4 -

raturen gewählt werden kann, da hierdurch Betriebsdaten verwirklicht werden können, die bei herkömmlichen Anlagen nur über vielstufige Kaskadenschaltungen erreichbar sind. Die genannten Vorzüge werden ergänzt durch ein Wärmeverhältnis, das theoretisch dem Carnot'schen Vergleichsprozeß entspricht, d.h. der Gütegrad der Anlage kann den Wert "1" erreichen. Lediglich die zur Wärmeübertragung notwendigen Grädigkeiten der integrierten Baugruppen bedingen Verluste, die aber durch erhöhten baulichen Aufwand in sehr engen Grenzen gehalten werden können. Da jeweils zwei der bekannten Bauteile zu einer integrierten Baugruppe zusammengefaßt werden, dabei gleichzeitig die üblicherweise erforderlichen Lösungsrekuperatoren ersetzt werden, bleibt der Bauaufwand trotz der größeren zu übertragenden Wärmemenge klein.

In Ausgestaltung der Erfindung wird vorgeschlagen, die sensible und latente Wärme des aus dem Desorber ausgetriebenen Arbeitsmitteldampfes dem Desorber rekuperativ wieder zuzuführen, indem der Dampf im Gegenstrom zum Desorber einen Dampfkühler durchströmt, der mit dem Desorber innerhalb der integrierten Baugruppe DA thermisch gekoppelt ist.

Durch diese Maßnahme verringert sich die extern zuzuführende Wärmemenge, da relativ große Wärmemengen rezykliert werden.

- 5 -

Dem im Hauptanspruch genannten Prinzip der differentiellen, nicht-adiabaten Desorption bzw. Absorption entspricht ein lokal überall vorhandenes Temperatur- und Konzentrationsgleichgewicht zwischen der Dampf- und Flüssigphase. Dieses Konzept läßt sich aber nicht in allen Fällen konstruktiv verwirklichen; man ist vielfach darauf angewiesen, speziell bei der Einleitung der Absorptionsvorgänge, die beiden Phasen an einer Stelle zu mischen. Das ist nur dann verlustfrei, wenn beide Phasen dieselbe Temperatur aufweisen.

Deshalb wird als bevorzugte Lösung bei dem erfindungsgemäßen Anlagenkonzept vorgeschlagen, den Niederdruckdampf rekuperatif innerhalb der integrierten Baugruppe DA auf die Temperatur einer geeigneten Mischstelle mit der armen Lösung vorzuwärmen.

In analoger Weise können bei der Mischung von Hochdruckdampf und reicher Lösung vor Eintritt in den Resorber Verluste auftreten, die auf Konzentrationsunterschiede zweier Flüssigphasen zurückzuführen sind. Der Hochdruckdampf befindet sich mit der bei der Rückkühlung ausgefällten Flüssigkeit im Konzentrationsgleichgewicht, während die reiche Lösung bei gleicher Temperatur als unterkühlte Flüssigkeit vorliegt.

Zur Vermeidung der hieraus resultierenden Mischungsverluste wird vorgeschlagen, die reiche Lösung innerhalb der

- 6 -

integrierten Baugruppe DA auf Siedetemperatur vorzuwärmen und mit dem Hochdruckdampf gleicher Temperatur zu vermischen.

Eine besonders bei etwas größeren Temperaturspannen der externen Wärmequellen bevorzugte Ergänzung des erfindungsgemäßen Anlagenkonzeptes ist dadurch gekennzeichnet, daß die arme Lösung vor Passieren der Drosselstelle zwischen der Hoch- und der Niederdruckseite des ersten Lösungskreislaufs durch Wärmeübertragung an den Desorber rückgekühlt wird.

Da die arme Lösung am Desorberaustritt bei Siedezustand vorliegt, würde jede unmittelbare Druckabsenkung zu Ausdampfung mit entsprechender Temperaturabsenkung führen, Kühlt man jedoch die Lösung bis auf die Siedetemperatur im niedrigeren Druckbereich ab, kann man einerseits die sensible Wärme im System rezyklieren und vermeidet andererseits die Ausdampfung.

Eine besonders vorteilhafte Ausführung der erfindungsgemäßen Resorptions-Anlage ergibt sich, wenn der aus dem ersten Teilstrom der reichen Lösung desorbierte Arbeitsmitteldampf nach dem Verfahren der differentiellen, nichtadiabaten Rektifikation geläutert wird. Der rektifizierte Hochdruckdampf ist am Austritt der Läuterungssäule frei von einer flüssigen Phase, so daß bei der Mischung mit der reichen Lösung des zweiten Lösungskreislaufs die oben erwähnten Mischungsverluste nicht auftreten können. Wesentlicher ist jedoch die Erweiterung des Arbeitsbereichs zu niederen Temperaturen, da die Konzentration des zweiten Lösungskreislaufs zu wesentlich höheren Werten bis hin zum reinen Arbeitsmittel getrieben werden kann, was den Übergang zu einer Absorptions-Anlage bedeutet.

Aus diesen Gründen wird erfindungsgemäß vorgeschlagen, den Dampfkühler in der integrierten Baugruppe DA als Rektifikator auszubilden.

Der Erfindungsgedanke wird in der Zeichnung beispielhaft erläutert.

Es zeigen

Fig. 1 das Prinzipschaltbild einer möglichst einfach gehaltenen Resorptions-Anlage, anhand dessen der Verfahrensablauf verfolgt werden kann,

Fig. 2 eine thermodynamisch optimierte Version der in Fig. 1 skizzierten Anlage und

Fig. 3 eine mit Rektifikation des Hochdruckdampfes arbeitende Anlage.

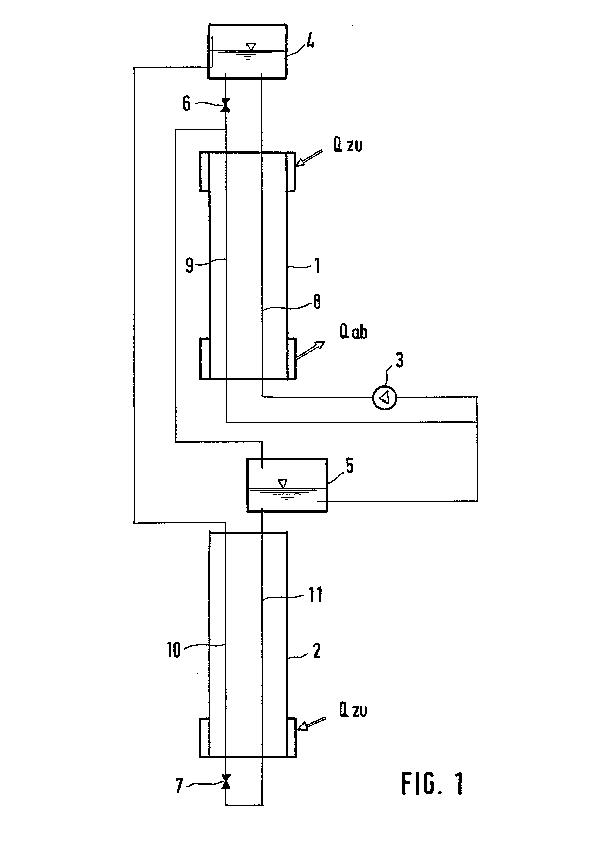

Entsprechend den obigen Ausführungen ist in Fig. 1 das Prinzipschaltbild einer Resorptions-Anlage dargestellt, in der die einzelnen Bauteile so angeordnet und thermisch miteinander gekoppelt sind, daß der erfindungsgemäße Wärmetransformationsprozeß durchgeführt werden kann. Dabei sei an dieser Stelle generell vermerkt, daß die im Oberbegriff der Anmeldung angesprochenen Bauteile, nämlich Desorber, Resorber, Entgaser und Absorber, durch die Zusammenfassung zu integrierten Baugruppen jeweils in einzelne Strömungskanäle aufgelöst werden, die innerhalb dieser Baugruppen mit den Strömungskanälen der anderen Bauteile in geeigneter Weise in thermischem Kontakt stehen.

In einer integrierten Baugruppe 1 (DA) des ersten Lösungskreislaufs sind die Kanäle des Desorbers 8 mit den Kanälen des Absorbers 9 thermisch gekoppelt; in einer integrierten Baugruppe 2 (RE) des zweiten Lösungskreislaufs stehen analog die Kanäle des Resorbers 10 mit den Kanälen des Entgasers 11 in thermischem Kontakt. Die beiden Kreisläufe werden durch die gemeinsame Lösungspumpe 3 betrieben. Im Hochdrucksammler 4 und im Niederdrucksammler 5 erfolgt jeweils die Separation des Arbeitsmitteldampfes von der Lösung. Das Drosselventil 6 dient der Entspannung der desorbierten (armen) Lösung des ersten Kreislaufs, während das Expansionsventil 7 durch Entspannung der stark angereicherten Lösung des zweiten Kreislaufs die zur Wärmeaufnahme notwendige Minimaltemperatur erzeugt. Auf die Darstellung weiterer zur Einstellung der Durchflüsse dienender Armaturen wurde aus Gründen der

- 9 -

Übersichtlichkeit verzichtet.

Die bei der Absorption und Resorption freigesetzte Wärme wird innerhalb der integrierten Baugruppen - bei der lokal herrschenden Temperatur - direkt zur Desorption bzw. Entgasung eingesetzt. Am Kopfende der Baugruppe 1 (DA) zugeführte Wärme maximaler Systemtemperatur stellt die für die Wärmetransformation nötige Exergie zur Verfügung, um die am Fußende der Baugruppe 2 (RE) aufgenommene Wärme minimaler Systemtemperatur auf das mittlere Temperaturniveau zu heben, das am Fußende der Baugruppe 1 (DA) herrscht. An dieser Stelle werden die eingespeisten Wärmemengen aus dem System abgezogen.

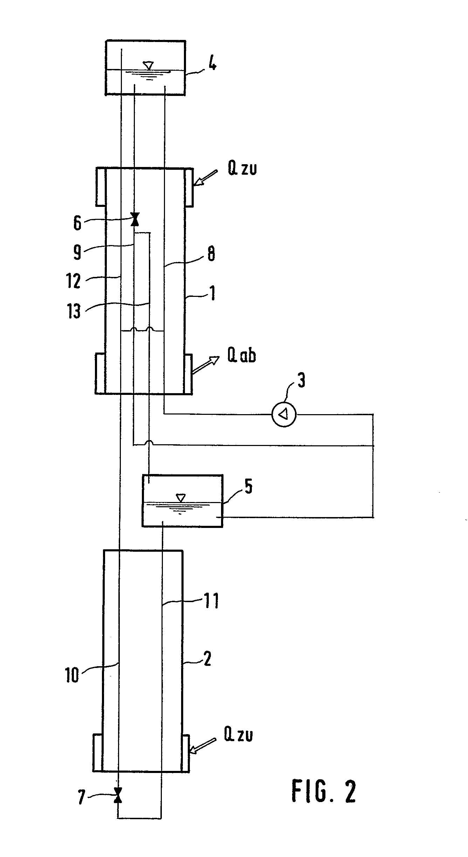

Das Blockschaltbild einer entsprechend den weiteren Ausgestaltungen der Erfindung modifizierten Anlage ist beispielhaft in Fig. 2 skizziert. Gegenüber der in Fig. 1 dargestellten Ausführung wurden folgende Ergänzungen eingetragen: Der aus dem Sammler 4 austretende Arbeitsmitteldampf wird in der Baugruppe 1 durch den Dampfkühler 12 geleitet, der mit dem Desorber 8 in thermischem Kontakt steht. Der aus dem Sammler 5 austretende Arbeitsmitteldampf strömt durch den Vorwärmer 13, der ebenfalls Bestandteil der Baugruppe 1 wird und der mit dem Absorber 9 in thermischem Kontakt steht. Der Strom der aus dem Sammler 4 austretenden armen Lösung gibt im oberen Teil der Baugruppe 1 sensible Wärme - im Sinne einer Lösungsrückführung - an den Desorber 8 ab, bevor die Drosselstelle 6 bei einer Temperatur passiert wird, die unterhalb der Siedetemperatur auf der Niederdruckseite liegt. Die reiche Lösung des zweiten Lösungskreislaufes wird über eine Verbindungsleitung 14 bei einer Temperatur aus dem gemeinsamen Desorberstrom abgezweigt, bei der die Siedetemperatur der Hochdruckseite der Lösung erreicht ist.

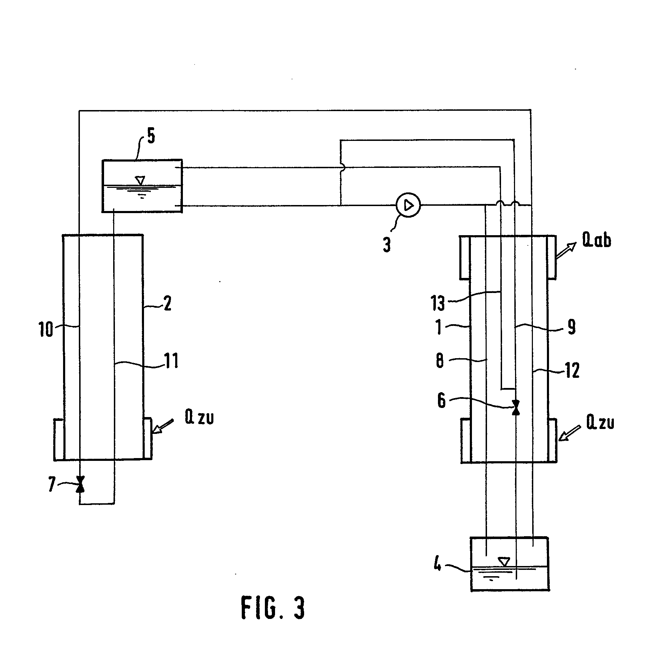

Das in Fig. 3 dargestellte Prinzipschaltbild einer mit Rektifikation des Hochdruckdampfs arbeitenden Resorptions-Anlage unterscheidet sich von der in Fig. 2 beschriebenen Anlage dadurch, daß der als Läuterungssäule arbeitende Dampfkühler 12 vom Dampf von unten nach oben durchströmt werden muß. Außerdem entfällt der innerhalb der Baugruppe 1 angeordnete Lösungsabzweig 14 zugunsten einer Anordnung außen.

- 11 -

Patentansprüche

1. Resorptions-Anlage zur Transformation von Wärme niedriger Temperatur auf mittlere Temperatur unter Einsatz der Exergie von Wärme hoher Temperatur, die zwei Lösungskreisläufe aufweist, in denen die sogenannte Lösung, ein Gemisch aus Arbeits- und Lösungsmittel, strömt, wobei in einem Desorber aus der unter höherem Druck stehenden Lösung des ersten Kreises Arbeitsmittel ausgetrieben wird, welches von der unter demselben Druck stehenden Lösung des zweiten Kreises in einem Resorber aufgenommen wird und nach Entspannung auf einen tieferen Druck in einem Entgaser wieder freigesetzt von der ebenfalls entspannten armen Lösung des ersten Kreises in einem Absorber wieder aufgenommen wird und wobei entsprechend der Thermodynamik der Zweistoffgemische die Desorption unter Aufnahme und die Absorption unter Abgabe von Wärme stattfindet, dadurch gekennzeichnet, daß unter Anwendung des Prinzips der differentiellen, nicht-adiabaten Desorption und Absorption die Differenzen zwischen den kennzeichnenden Temperaturen durch Konzentrationsänderungen der Lösungen bei nur geringer Druckdifferenz überbrückt werden, indem Desorber (8) und Absorber (9) zu einer integrierten Baugruppe DA (1) und Resorber (10) und Entgaser (11) zu einer weiteren integrierten Baugruppe RE (2) mit jeweils internem thermischen Kontakt zusammengefaßt werden und die beiden Lösungskreis-

- 12 -

läufe bei gleicher Temperatur, gleichem Druck und identischer Konzentration am Austritt aus dem Absorber (9) bzw. Entgaser (11) vereinigt, durch eine gemeinsame Lösungspumpe (3) auf höheren Druck gefördert, vor dem Eintritt in den Desorber (8) bzw. Resorber (10) wieder getrennt werden.

2. Resorptions-Anlage nach Anspruch 1, dadurch gekennzeichnet, daß die sensible und latente Wärme des aus dem Desorber (8) ausgetriebenen Arbeitsmitteldampfs dem Desorber (8) rekuperativ wieder zugeführt wird, indem der Dampf im Gegenstrom zum Desorber (8) einen Dampfkühler (12) durchströmt, der mit dem Desorber (8) innerhalb der integrierten Baugruppe DA (1) thermisch gekoppelt ist.

3. Resorptions-Anlage nach den Ansprüchen 1 und 2, dadurch gekennzeichnet, daß der Niederdruckdampf rekuperativ innerhalb der integrierten Baugruppe DA (1) auf die Temperatur einer geeigneten Mischstelle mit der armen Lösung vorgewärmt wird.

4. Resorptions-Anlage nach den Ansprüchen 1 bis 3, dadurch gekennzeichnet, daß die reiche Lösung des zweiten Lösungskreislaufs innerhalb der integrierten Baugruppe DA (1) auf Siedetemperatur vorgewärmt wird, bevor sie mit Hochdruckdampf gleicher Temperatur vermischt wird.

- 13 -

5. Resorptions-Anlage nach den Ansprüchen 1 bis 4, dadurch gekennzeichnet, daß die arme Lösung des ersten Kreislaufs vor Passieren der Drosselstelle (6) zwischen der Hoch- und Niederdruckseite des ersten Lösungskreislaufs durch Wärmeübertragung an den Desorber (8) rückgekühlt wird.

6. Resorptions-Anlage nach den Ansprüchen 1 bis 4, dadurch gekennzeichnet, daß der Dampfkühler (12) in der integrierten Baugruppe DA (1) als Rektifikator ausgebildet ist.

FIG. 1

0056147

FIG. 2

0056147

FIG. 3

| | Europäisches Patentamt | **EUROPÄISCHER RECHERCHENBERICHT** | Nummer der Anmeldung EP 81 11 0773 |
| | | | |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 2 182 453 (SELLEW)  * Seite 1, rechte Spalte, Zeile 11 - Seite 8, linke Spalte, Zeile 15; Figuren 1-21 * | 1,2 |
| | -- | |
| A | DE - C - 278 076 (ALTENKIRCH)  * Seite 3, Zeile 119 - Seite 8, Zeile 23; Figuren 1-8 * | 1 |
| | -- | |
| A | US - A - 2 193 535 (MAIURI)  * Seite 2, linke Spalte, Zeile 64 - Seite 3, rechte Spalte, Zeile 30; Figuren 1-3 * | 1 |
| | -- | |
| A | DE - C - 678 942 (SIEMENS-SCHUCK-ERTWERKE) | |
| A | DE - A - 2 629 441 (LINDE) | |
| A | CH - A - 121 415 (SULZER) | |
| A | EP - A - 0 001 296 (KNOCHE) | |
| A | US - A - 2 182 098 (SELLEW) | |
| | ---- | |

**KLASSIFIKATION DER ANMELDUNG (Int. Cl.)**

F 25 B 29/00
F 25 B 15/12

**RECHERCHIERTE SACHGEBIETE (Int. Cl.)**

F 25 B
F 24 J

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| Den Haag | 19-04-1982 | BOETS |

EPA form 1503.1   06.78